# FASCICULE DE BREVET EUROPEEN

(11) **EP 0 574 291 B1**
(45) Date de publication et mention de la délivrance du brevet: **21.08.1996**
(21) Numéro de dépôt: 93401435.8
(22) Date de dépôt: 04.06.1993
(51) Int. Cl.: B60S 1/34

(54) **Dispositif d'essuie-glace comportant des moyens pour faire varier la pression d'essuyage**
Scheibenwischer mit Vorrichtung zum Regeln des Wischdrucks
Windscreen wiper with means to regulate the wiping pressure

(30) Priorité: 10.06.1992 FR 9206982
(43) Date de publication de la demande: 15.12.1993
(73) Titulaire: PAUL JOURNEE S.A., F-92700 Colombes (FR)
(72) Inventeur: Journee, Maurice, F-60240 Reilly (FR); Jehannet, Jean-Pierre, F-27200 Vernon (FR)
(74) Mandataire: Lemaire, Marc

(56) Documents cités:
- EP-A- 0 412 804
- DE-A- 4 028 494
- DE-C- 4 032 762
- US-A- 4 791 697

## Description

La présente invention concerne un dispositif d'essuie-glace, notamment pour véhicule automobile.

L'invention concerne plus particulièrement un essuie-glace du type comportant un bras d'essuie-glace qui porte au moins un balai d'essuyage et qui est monté articulé, autour d'un axe d'articulation, sur une tête d'entraînement de l'essuie-glace qui est soumise à un mouvement de rotation alternatif par un arbre d'essuyage et qui permet d'obtenir un balayage de la vitre à essuyer.

Le bras d'essuie-glace porte, par l'intermédiaire du porte-balai, un balai d'essuyage articulé qui est apte à essuyer la surface vitrée telle que par exemple un pare-brise de véhicule automobile dont il épouse la forme galbée.

Afin d'obtenir un essuyage correct de la surface vitrée, il est nécessaire que la lame d'essuyage de la l'essuie-glace soit appliquée sur la surface vitrée à essuyer avec une force de pression, ou force d'essuyage importante.

A cet effet, il est généralement prévu au moins un ressort, tel que par exemple un ressort hélicoïdal de traction, qui est disposé entre la tête d'entraînement et le reste du bras d'essuie-glace et qui applique au bras d'essuie-glace un couple d'essuyage dont la valeur nominale est sensiblement constante, de manière à venir plaquer la lame d'essuyage contre la surface vitrée.

Avec la conception de ce dispositif, la lame est appuyée pendant le mouvement de balayage de la surface vitrée, mais également en position de repos du dispositif d'essuie-glace.

Du fait de la constance de la valeur nominale de l'effort d'essuyage qui est appliqué à la lame lorsque le dispositif d'essuie-glace est au repos, on constate que la lame conserve une déformation résiduelle résultant de l'écrasement de son profil contre la surface vitrée, la lame ne procurant plus alors un essuyage suffisamment efficace de la surface vitrée. Il est donc souhaitable de pouvoir réduire la valeur de l'effort d'essuyage appliqué à la lame lorsque l'essuie-glace est au repos.

Par ailleurs, la qualité d'essuyage de la surface vitrée dépend en fonctionnement de la maîtrise de l'effort d'essuyage qui est appliqué à la lame, et ceci notamment en fonction de la vitesse de déplacement du véhicule, en fonction de la fréquence du mouvement de balayage de l'essuie-glace, et en fonction de la position de la lame d'essuyage sur le pare-brise.

Le document EP-A-0558 414 à considérer seulement au titre de la nouveaute aux termes de l'article 54(3) et (4) ainsi que de l'article 56, deuxième phrase, de la Convention sur le Brevet Europeén (CBE). Il concerne un dispositif permettant d'appliquer à un bras d'essuie-glace un couple complémentaire constant pendant tout le mouvement de balayage c'est-à-dire quelle que soit la position angulaire du bras d'essuie-glace et dont l'agencement a pour but d'éviter que des sollicitations angulaires cycliques du bras par rapport à la tête d'entraînement ne se transmettent à un actionneur qui permet de faire varier la valeur du couple complémentaire.

Du fait du galbe de la surface vitrée à essuyer, la lame d'essuyage n'est pas appliquée avec un effort d'essuyage sensiblement constant sur toute sa longueur pour les différentes positions qu'elle occupe au cours d'un cycle de balayage.

Il est donc souhaitable de pouvoir garantir que la lame d'essuyage soit appliquée avec un effort d'essuyage suffisant contre la surface vitrée pour ses différentes positions lors du balayage.

Enfin, au cours d'un cycle de balayage, il est également souhaitable de pouvoir réduire la force d'essuyage pour les deux positions extrêmes qu'occupe l'essuie-glace au cours d'un cycle de balayage, notamment pour faciliter l'inversion de mouvement.

Afin de résoudre les différents problèmes qui viennent d'être mentionnés, l'invention propose un dispositif d'essuie-glace du type mentionné précédemment, comportant des moyens pour faire varier automatiquement la valeur du couple d'essuyage en fonction de la variation de la position angulaire relative du bras d'essuie-glace par rapport à la tête d'entraînement, lesdits moyens comportant une came reliée à la tête d'entraînement ou au bras d'essuie-glace et un élément suiveur de came qui est relié au bras d'essuie-glace ou à la tête d'entraînement et qui se déplace le long de la came en fonction des déplacements angulaires relatifs entre le bras d'essuie-glace et la tête d'entraînement de manière à faire varier automatiquement la valeur du couple d'essuyage à appliquer au bras.

Dans la présente invention, la came et le suiveur de came ne constituent pas un dispositif d'application d'un couple complémentaire comme c'est le cas du dispositif décrit dans le document EP-A-0558 414 mais font partie des moyens pour faire varier automatiquement la valeur du couple d'essuyage au bras d'essuyage.

Selon divers modes de réalisation de l'invention :
- la came est reliée à la tête d'entraînement et l'élément suiveur de came est relié au bras d'essuie-glace par un organe de transmission gui est susceptible de se déplacer par rapport au bras d'essuie-glace à l'encontre d'un effort élastique de tarage ;
- l'organe de transmission est monté pivotant sur le bras d'essuie-glace autour d'un axe de pivotement parallèle à l'axe d'articulation, et il est prévu un organe élastique de tarage qui sollicite l'organe de transmission en rotation autour de son axe de pivotement dans le sens correspondant au maintien de l'élément suiveur de came en contact avec la came ;
- l'organe de transmission comporte une branche qui s'étend selon une direction perpendiculaire à l'axe de pivotement et dont une extrémité comporte l'élément suiveur de came ;
- l'extrémité de la branche comporte un galet monté tournant autour d'un axe de rotation parallèle à l'axe de pivotement ;
- l'organe élastique de tarage est un ressort hélicoïdal de compression dont une première extrémité sollicite la branche et dont la seconde extrémité coopère avec une surface d'appui formée dans le bras d'essuie-glace ;
- la branche comporte un bras sur l'une des extrémités duquel agit le ressort ;
- la came est montée mobile par rapport à la tête d'entraînement selon une direction perpendiculaire à l'axe d'articulation et il est prévu des moyens de réglage de la position de la came par rapport à la tête d'entraînement pour régler la valeur nominale du couple d'essuyage ;
- les moyens de réglage sont des moyens de réglage manuel ;
- la came est formée sur une pièce reliée à l'extrémité de l'organe de sortie d'un actionneur linéaire dont le corps est associé à la tête d'entraînement.

D'autres caractéristiques et avantages de l'invention apparaîtront à la lecture de la description détaillée qui va suivre pour la compréhension de laquelle on se reportera aux dessins annexés dans lesquels :
- La figure 1 est une vue de dessus avec arrachement partiel d'un dispositif d'essuie-glace selon l'état de la technique ;
- la figure 2 est une vue schématique en coupe transversale partielle à plus grande échelle, du dispositif d'essuie-glace qui est illustré partiellement à la figure 1 et qui, conformément à l'invention, comporte des moyens pour faire varier automatiquement la valeur du couple d'essuyage ;
- la figure 3 est une vue schématique à plus grande échelle d'un premier exemple du profil de la came du dispositif illustré à la figure 2 ;
- la figure 4 est un schéma illustrant la valeur de l'effort d'essuyage pour les différentes positions qu'occupe le bras d'essuie-glace sur la surface vitrée, au cours d'un cycle de balayage, lorsque la came dont le profil est illustré à la figure 3 est utilisée ;
- la figure 5 est une vue similaire à celle de la figure 3 illustrant une variante de réalisation du profil de la came ;
- la figure 6 est une vue similaire à celle de la figure 1 illustrant une variante de réalisation dans laquelle le dispositif d'essuie-glace comporte des moyens commandés pour faire varier globalement la valeur du couple d'essuyage ;
- la figure 7 est une vue similaire à celle de la figure 2 illustrant un mode de réalisation de l'invention en association avec un dispositif d'essuie-glace du type de celui illustré à la figure 6 ; et
- les figures 8 et 9 sont des vues similaires à celles des figures 3 et 4 pour un mode de réalisation particulier du profil de la came représentée à la figure 7.

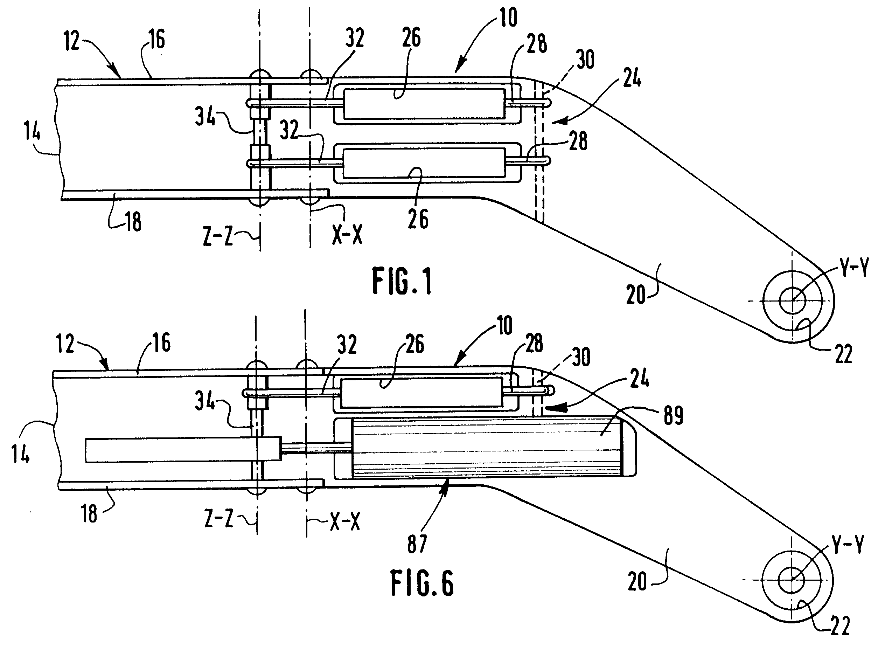

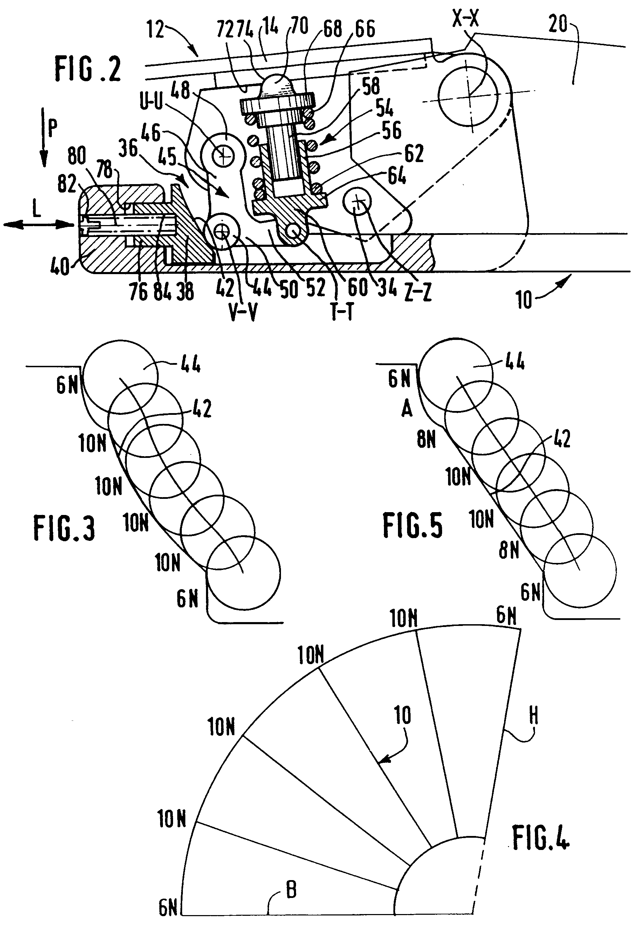

Le dispositif d'essuie-glace 10 illustré aux figures 1 et 2 comporte un bras d'essuie-glace 12 formant porte-balai et dont la portion illustrée sur les figures se présente sous la forme d'un profilé creux en U constitué par un dos 14 et par deux joues latérales perpendiculaires 16 et 18.

Le bras d'essuie-glace 12 est articulé sur une tête d'entraînement 20 autour d'un axe géométrique X-X qui s'étend selon une direction perpendiculaire à la direction longitudinale générale du bras d'essuie-glace 12.

La tête d'entraînement 20 comporte, à son extrémité opposée à l'axe d'articulation X-X, un alésage 22, d'axe Y-Y sensiblement perpendiculaire à l'axe d'articulation, qui est prévu pour recevoir un arbre d'essuyage (non représenté) qui permet d'entraîner en rotation la tête d'entraînement 20 en un mouvement alternatif par tout moyen tel qu'un moteur d'essuyage (non représenté).

Selon une technique connue, le dispositif d'essuie-glace 10 comporte des moyens 24 qui permettent d'appliquer au bras 12 un effort ou pression d'essuyage de valeur sensiblement constante et orienté en direction de la surface à essuyer (non représentée).

Le dispositif 24 est ici constitué par une paire de ressorts hélicoïdaux de traction 26 dont les premières extrémités 28 sont accrochées sur une tige transversale 30 de la tête d'entraînement et dont les secondes extrémités 32 sont accrochées sur une tige transversale 34 du bras d'essuie-glace.

L'axe Z-Z de la tige 34 est situé en-dessous de l'axe X-X, c'est-à-dire entre ce dernier et la surface à essuyer de manière que les ressorts 26 appliquent un couple d'essuyage au balai 12 autour de son axe d'articulation X-X dont il résulte une pression d'essuyage P appliquée à la lame d'essuyage.

Selon cette conception connue, la valeur nominale du couple d'essuyage ou de la pression d'essuyage P est sensiblement constante et ne varie notamment pratiquement pas quelle que soit la position angulaire relative du bras d'essuie-glace 12 par rapport à la tête d'entraînement 20.

Conformément à l'invention, on a représenté à la figure 2 des moyens 36 permettant de faire varier automatiquement la valeur du couple d'essuyage en fonction de la position angulaire du bras d'essuie-glace, autour de l'axe X-X, par rapport à la tête d'entraînement 20.

Les moyens 36 comportent une came 38 qui est reliée à la portion d'extrémité libre 40 qui prolonge le corps de la tête d'entraînement 20.

La came 38 définit un profil de came 42 avec lequel coopère un galet suiveur de came 44.

Les moyens 36 comportent également un organe de transmission réalisé sous la forme d'un basculeur 45.

Une branche 46 du basculeur 45 est montée pivotante, par l'intermédiaire de sa première extrémité 48, par rapport au bras d'essuie-glace 12 et autour d'un axe de pivotement U-U qui est parallèle à l'axe d'articulation X-X.

La seconde extrémité 50 de la branche 46 porte le galet suiveur de came 44 qui est monté tournant autour d'un axe V-V qui est parallèle à l'axe de pivotement U-U.

Le basculeur 45 comporte également un bras 52 qui prolonge la seconde extrémité 50 de la branche 46 en s'étendant selon une direction sensiblement perpendiculaire à celle de la branche 46.

La branche 46 et le bras 52 s'étendent tous les deux dans un plan perpendiculaire aux axes d'articulation X-X et de pivotement U-U.

Les moyens 36 comportent également un ressort de tarage 54.

Le ressort de tarage 54 est un ressort hélicoïdal de compression.

Le ressort 54 est porté par un ensemble constitué par un cylindre 56 et un piston 58 monté coulissant dans l'alésage du cylindre 56.

La partie d'extrémité 60 du corps du cylindre 56 est montée articulée sur l'extrémité libre du bras 52 autour d'un axe d'articulation T-T parallèle aux axes U-U et V-V.

La première extrémité 62 du ressort 54 prend appui sur un épaulement radial extérieur 64 du corps du cylindre 56 tandis que la seconde extrémité 66 du ressort 54 prend appui sur un épaulement radial extérieur 68 du corps du piston 58.

L'extrémité libre 70 du corps du piston 58 prend appui contre une surface d'appui 72 formée dans le dos du bras d'essuie-glace 12 par l'intermédiaire d'une articulation du type à rotule 74.

Le ressort de tarage 54 sollicite donc en permanence le basculeur 45 en rotation autour de l'axe U-U, dans le sens horaire en considérant la figure 2, de manière à appliquer le galet suiveur de came 44 contre le profil 42 de la came 38.

Comme on peut le constater sur la figure 2, la came 38 est montée sur la portion d'extrémité 40 de la tête d'entraînement 20 avec une possibilité de déplacement par rapport à cette dernière selon une direction L.

A cet effet, un prolongement 76 de la came 38 est reçu en coulissement dans un logement de guidage 78 formé dans la portion d'extrémité 40.

Une vis de réglage manuel 80 est reçue dans deux taraudages 82 et 84 formés respectivement dans la portion d'extrémité 40 et dans le prolongement 76 de manière à permettre un réglage de la position de la came 38, selon la direction L et par rapport à la portion d'extrémité 40, par une simple rotation de la vis de réglage 80.

La vis 80 permet donc de régler manuellement la position de la came 38 par rapport à la tête d'entraînement 20 et donc par rapport aux composants des moyens 36 associés au bras d'essuie-glace 12.

On décrira maintenant le mode de fonctionnement des moyens 36.

Au cours des déplacements du balai d'essuie-glace sur le pare-brise, qui sont schématisés à la figure 4, et du fait du profil galbé du pare-brise, le balai d'essuie-glace 12 subit des déplacements angulaires oscillants autour de l'axe X-X par rapport à la tête d'entraînement 20.

De ce fait, le galet suiveur de came 44 se déplace le long du profil 42 de la came 38 qui est globalement orienté sensiblement selon une tangente à un cercle centré autour de l'axe X-X.

Du fait des déplacements relatifs des éléments 12 et 20, le galet 44 est soumis à un effort de réaction qui lui est appliqué par le profil 42 et le basculeur 45 transmet cet effort au bras d'essuie-glace 12, ce qui se traduit par un couple complémentaire d'essuyage dont la valeur varie en fonction du profil 42 et qui s'ajoute ou se retranche à la valeur nominale moyenne du couple d'essuyage appliqué au bras d'essuie-glace 12 par les ressorts hélicoïdaux de traction 26.

On a illustré aux figures 3 et 4 un exemple de réalisation du profil 42 le long duquel sont indiquées les valeurs de la pression d'essuyage P, exprimées en Newtons, en fonction de la position relative du galet 44 le long du profil 42.

En partant de la position basse B, on constate que la valeur de la pression d'essuyage P varie depuis un minimum de 6 Newtons puis augmente jusqu'à une valeur de 10 Newtons qui est sensiblement constante au cours de la portion principale de la course de balayage, et ceci du fait du profil sensiblement circulaire de la portion centrale de la came 38, puis retombe à une valeur réduite de 6 Newtons pour la position haute H du balai d'essuie-glace.

Dans la variante de réalisation illustrée à la figure 5, la portion centrale du profil 42 est sensiblement rectiligne et il s'en traduit un accroissement progressif puis une réduction progressive de la valeur de la pression d'essuyage dans la partie centrale du cycle de balayage.

Le ressort de tarage 54 est choisi de manière que sa constante élastique applique au basculeur un couple résistant d'une valeur prédéterminée qui le sollicite, dans le sens horaire en considérant la figure, autour de l'axe U-U. La valeur de la constante élastique du ressort 54 est choisie de manière que le couple résistant soit légèrement supérieur au couple de réaction qui est appliqué au basculeur par le galet suiveur de came 44 et qu'ainsi, le basculeur puisse appliquer un couple complémentaire au bras d'essuie-glace 12.

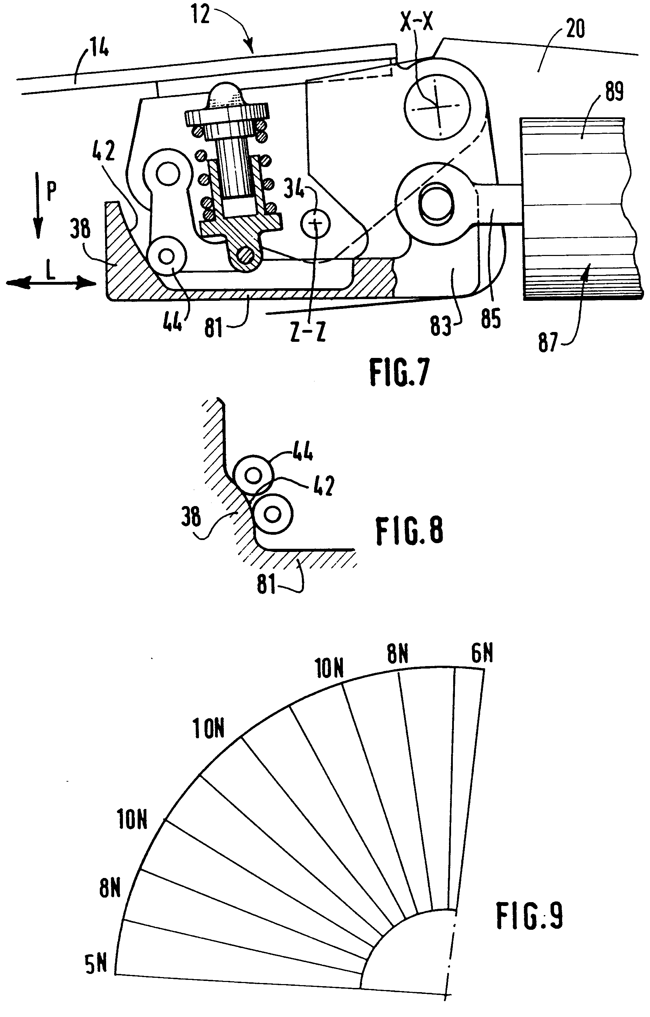

On décrira maintenant la variante de réalisation illustrée aux figures 6 à 9.

Dans cette variante, la came 38 est réalisée à l'extrémité d'une pièce 81 qui est guidée en coulissement selon la direction L dans la tête d'entraînement 20 et dont une extrémité 83 est reliée à l'extrémité 85 de la tige de sortie d'un actionneur linéaire 87 dont le corps 89 est fixé sur la tête d'entraînement 20.

L'actionneur 87 remplace les moyens de réglage manuels de la position de la came 38 par rapport à la tête d'entraînement 20 et permet donc de faire varier cette position, et par conséquent la valeur nominale du couple d'essuyage en fonction de paramètres de commande qui sont par exemple représentatifs de paramètres de fonctionnement du véhicule tels que sa vitesse de déplacement.

Le profil 42 de la came 38 illustré à la figure 8 est conçu de manière à obtenir un accroissement de la pression d'essuyage en fonction de la position du balai d'essuie-glace sur le pare-brise. Il est ainsi possible d'obtenir une pression de 6 Newtons en position parking, puis une augmentation progressive de 6 à 10 Newtons, puis une diminution de 10 à 6 Newtons lors du balayage aller et retour avec, en position haute, une pression de 6 Newtons facilitant le rebroussement.

## Revendications

1. Dispositif d'essuie-glace (10), notamment de véhicule automobile, du type comportant un bras d'essuie-glace (12) qui porte au moins un balai d'essuyage et qui est monté articulé, autour d'un axe d'articulation (X-X), sur une tête d'entraînement (20), et des moyens agencés entre la tête d'entraînement et le bras d'essuie-glace (12) pour appliquer à ce dernier un couple d'essuyage et qui comportent au moins un ressort qui applique au bras d'essuie-glace (12) un couple nominal d'essuyage dont la valeur est sensiblement constante quelle que soit la position angulaire relative du bras d'essuie-glace (12) par rapport à la tête d'entraînement (20) et des moyens (36) pour faire varier automatiquement la valeur du couple d'essuyage en fonction de la variation de ladite position angulaire, lesdits moyens comportant une came (38, 42) reliée à la tête d'entraînement (20, 40) ou au bras d'essuie-glace et un élément suiveur de came (44) qui est relié au bras d'essuie-glace (12) ou à la tête d'entraînement et qui se déplace le long de la came (38, 42) en fonction des déplacements angulaires relatifs entre le bras d'essuie-glace (12) et la tête d'entraînement (20) de manière à faire varier automatiquement la valeur du couple d'essuyage à appliquer au bras (12).

2. Dispositif d'essuie-glace selon la revendication 1, caractérisé en ce que la came (38) est reliée à la tête d'entraînement (20, 40), et en ce que l'élément suiveur de came (44) est relié au bras d'essuie-glace (12) par un organe de transmission (45) qui est susceptible de se déplacer par rapport au bras d'essuie-glace (12) à l'encontre d'un effort élastique de tarage.

3. Dispositif d'essuie-glace selon la revendication 2, caractérisé en ce que l'organe de transmission (45) est monté pivotant sur le bras d'essuie-glace (12) autour d'un axe de pivotement (U-U) parallèle à l'axe d'articulation, et en ce qu'il comporte un organe élastique de tarage (54) qui sollicite l'organe de tranmission (45) en rotation autour de son axe de pivotement (U-U) dans le sens correspondant au maintien en contact de l'élément suiveur de came (44) avec la came (38, 42).

4. Dispositif d'essuie-glace selon la revendication 3, caractérisé en ce que l'organe (45) de transmission comporte une branche (46) qui s'étend selon une direction perpendiculaire à l'axe de pivotement (U-U) et dont une extrémité (50) comporte ledit élément suiveur de came (44).

5. Dispositif d'essuie-glace selon la revendication 4, caractérisé en ce que ladite extrémité de la branche (46) comporte un galet (44) monté tournant autour d'un axe de rotation (V-V) parallèle à l'axe de pivotement (U-U).

6. Dispositif d'essuie-glace selon l'une des revendications 4 ou 5, caractérisé en ce que l'organe élastique de tarage (54) est un ressort hélicoïdal de compression dont une première extrémité (62) sollicite ladite branche (46) et dont la seconde extrémité (66) coopère avec une surface d'appui (72) formée dans le bras d'essuie-glace (12).

7. Dispositif d'essuie-glace selon la revendication 6, caractérisé en ce que la branche (46) comporte un bras (52) sur l'une des extrémités duquel agit le ressort (54).

8. Dispositif d'essuie-glace selon l'une quelconque des revendications 1 à 7, caractérisé en ce que la came (38, 42) est montée mobile par rapport à la tête d'entraînement (20, 40) selon une direction (L) perpendiculaire à l'axe d'articulation (X-X), et en ce qu'il est prévu des moyens (80, 87) de réglage de la position de la came (38) par rapport à la tête d'entraînement (20).

9. Dispositif d'essuie-glace selon la revendication 8, caractérisé en ce que lesdits moyens de réglage sont des moyens de réglage manuel (80).

10. Dispositif d'essuie-glace selon la revendication 8, caractérisé en ce que la came (38) est formée sur une pièce (81) reliée à l'extrémité (85) de l'organe de sortie d'un actionneur linéaire (87) dont le corps (89) est associé à la tête d'entraînement (20).

## Claims

1. Screen wiper apparatus (10), especially for a motor vehicle, of the type comprising a screen wiper arm (12) which carries at least one wiper blade and which is articulated about an articulation axis (X-X) on a drive head (20), and means disposed between the drive head and the wiper arm (12) so as to apply a wiping torque to the latter, and which comprise at least one spring which applies to the screen wiper arm (12) a nominal wiping torque, the value of which is substantially constant regardless of the relative angular position of the screen wiper arm (12) with respect to the drive head (20), and means (36) for causing the value of the wiping torque to vary automatically as a function of the variation in the said angular position, the said means comprising a cam (38, 42) which is coupled to the drive head (20, 40) or to the screen wiper arm, together with a cam follower element (44) which is connected to the screen wiper arm (12) or to the drive head, and which is displaceable along the cam (38, 42) as a function of the relative angular displacements between the screen wiper arm (12) and the drive head (20), in such a way as to cause the value of the wiping torque to be applied to the arm (12) to be varied automatically.

2. Screen wiper apparatus according to Claim 1, characterised in that the cam (38) is connected to the drive head (20, 40), and in that the cam follower element (44) is connected to the screen wiper arm (12) through a transmission member (45) which is adapted to be displaced with respect to the screen wiper arm (12) against a resilient loading force.

3. Screen wiper apparatus according to Claim 2, characterised in that the transmission member (45) is mounted pivotally on the screen wiper arm (12) about a pivot axis (U-U) which is parallel to the articulation axis, and in that it further includes a resilient loading member (54) which urges the transmission member (45) in rotation about its pivot axis (U-U) in the direction appropriate for maintaining the cam follower element (44) in contact with the cam (38, 42).

4. Screen wiper apparatus according to Claim 3, characterised in that the transmission member (45) includes a branch (46) which extends in a direction at right angles to the pivot axis (U-U), and one of the ends (50) of which includes the said cam follower element (44).

5. Screen wiper apparatus according to Claim 4, characterised in that the said end of the branch (46) includes a roller (44) which is mounted for rotation about an axis of rotation (V-V) parallel to the pivot axis (U-U).

6. Screen wiper apparatus according to Claim 4 or Claim 5, characterised in that the resilient loading member (54) is a helical compression spring, a first end (62) of which exerts a biasing force on the said branch (46), with its second end (66) cooperating with an engagement surface (72) defined in the screen wiper arm (12).

7. Screen wiper apparatus according to Claim 6, characterised in that the branch (46) includes an arm (52), with the spring (54) acting on one end of the arm.

8. Screen wiper apparatus according to any one of Claims 1 to 7, characterised in that the cam (38, 42) is mounted for movement with respect to the drive head (20, 40) in a direction (L) at right angles to the articulation axis (X-X), and in that means (80, 87) are provided for adjusting the position of the cam (38) with respect to the drive head (20).

9. Screen wiper apparatus according to Claim 8, characterised in that the said adjusting means are manual adjusting means (80).

10. Screen wiper apparatus according to Claim 8, characterised in that the cam (38) is formed on a member (81) which is connected to the end (85) of the output member of a linear actuator (87), the body (89) of which is associated with the drive head (20).

## Patentansprüche

1. Scheibenwischer (10), insbesondere für Kraftfahrzeuge, in der Ausführung mit einem Scheibenwischerarm (12), der wenigstens ein Wischerblatt trägt und der gelenkig um eine Gelenkachse (X-X) an einem Antriebskopf (20) gelagert ist, und mit Mitteln, die zwischen dem Antriebskopf und dem Scheibenwischerarm (12) angeordnet sind, um auf diesen einen Wischeranpreßdruck anzuwenden, und die wenigstens eine Feder umfassen, die auf den Scheibenwischerarm (12) einen Nenn-Wischeranpreßdruck anwendet, dessen Wert in etwa konstant ausfällt, unabhängig von der relativen Winkelposition des Scheibenwischerarms (12) im Verhältnis zum Antriebskopf (20), sowie mit Mitteln (36), um den Wert des Wischeranpreßdrucks automatisch in Abhängigkeit von der Veränderung der besagten Winkelposition zu verändern, wobei die besagten Mittel einen Nocken (38, 42) umfassen, der mit dem Antriebskopf (20, 40) oder mit dem Scheibenwischerarm verbunden ist, und eine Kurvenrolle (44), die mit dem Scheibenwischerarm (12) oder mit dem Antriebskopf verbunden ist und die sich entlang dem Nocken (38, 42) in Abhängigkeit von den relativen Winkelbewegungen zwischen dem Scheibenwischerarm (12) und dem Antriebskopf (20) bewegt, um den Wert des auf den Scheibenwischerarm (12) anzuwendenden Wischeranpreßdrucks automatisch zu verändern.

2. Scheibenwischer nach Anspruch 1 , **dadurch gekennzeichnet,** daß der Nocken (38) mit dem Antriebskopf (20, 40) verbunden ist und daß die Kurvenrolle (44) mit dem Scheibenwischerarm (12) über ein Übertragungsorgan (45) verbunden ist, das sich im Verhältnis zum Scheibenwischerarm (12) entgegen einer elastischen Einstellkraft bewegen kann.

3. Scheibenwischer nach Anspruch 2 , **dadurch gekennzeichnet,** daß das Übertragungsorgan (45) schwenkbar am Scheibenwischerarm (12) um eine Schwenkachse (U-U) gelagert ist, die parallel zur Gelenkachse verläuft, und daß ein elastisches Einstellorgan (54) vorgesehen ist, das das Übertragungsorgan (45) drehend um seine Schwenkachse (U-U) in der Richtung beansprucht, in der die Kurvenrolle (44) mit dem Nocken (38, 42) in Berührung gehalten wird.

4. Scheibenwischer nach Anspruch 3 , **dadurch gekennzeichnet,** daß das Übertragungsorgan (45) einen Schenkel (46) umfaßt, der sich in einer Richtung erstreckt, die senkrecht zur Schwenkachse (U-U) verläuft, und dessen Ende (50) die besagte Kurvenrolle (44) umfaßt.

5. Scheibenwischer nach Anspruch 4 , **dadurch gekennzeichnet,** daß das besagte Ende des Schenkels (46) eine Rolle (44) umfaßt, die drehbar um eine Drehachse (V-V) gelagert ist, die parallel zur Schwenkachse (U-U) verläuft.

6. Scheibenwischer nach einem der Ansprüche 4 oder 5, **dadurch gekennzeichnet,** daß das elastische Einstellorgan (54) eine Schraubendruckfeder ist, deren erstes Ende (62) den besagten Schenkel (46) beaufschlagt und deren zweites Ende (66) mit einer Auflagefläche (72) zusammenwirkt, die in den Scheibenwischerarm (12) eingearbeitet ist.

7. Scheibenwischer nach Anspruch 6 , **dadurch gekennzeichnet,** daß der Schenkel (46) einen Arm (52) umfaßt, auf den an einem seiner Enden die Feder (54) einwirkt.

8. Scheibenwischer nach einem der Ansprüche 1 bis 7, **dadurch gekennzeichnet,** daß der Nocken (38, 42) beweglich im Verhältnis zum Antriebskopf (20, 40) entlang einer Richtung (L) gelagert ist, die senkrecht zur Gelenkachse (X-X) verläuft, und daß Mittel (80, 87) zur Regelung der Position des Nockens (38) im Verhältnis zum Antriebskopf (20) vorgesehen sind.

9. Scheibenwischer nach Anspruch 8 , **dadurch gekennzeichnet,** daß die besagten Regelmittel Mittel für eine manuelle Regelung (80) sind.

10. Scheibenwischer nach Anspruch 8 , **dadurch gekennzeichnet,** daß der Nocken (38) an einem Teil (81) ausgebildet ist, das mit dem Ende (85) des Ausgangsorgans eines linearen Stellglieds (87) verbunden ist, dessen Körper (89) zum Antriebskopf (20) gehört.
